# EUROPÄISCHE PATENTSCHRIFT

(11) **EP 0 471 714 B1**
(45) Veröffentlichungstag und Bekanntmachung des Hinweises auf die Patenterteilung: **15.12.1993**
(21) Anmeldenummer: 90907000.5
(22) Anmeldetag: 05.05.1990
(51) Int. Cl.: B28B 21/98

(54) **ALUMINIUMOXIDROHRE UND VERFAHREN ZU IHRER HERSTELLUNG**
ALUMINIUM OXIDE TUBES AND PROCESS FOR MANUFACTURING THEM
TUBES EN OXYDE D'ALUMINIUM ET PROCEDE POUR LEUR FABRICATION

(30) Priorität: 11.05.1989 DE 3915428
(43) Veröffentlichungstag der Anmeldung: 26.02.1992
(73) Patentinhaber: Hoechst CeramTec Aktiengesellschaft, 95100 Selb (DE); DEGUSSA AKTIENGESELLSCHAFT, 60040 Frankfurt (DE)
(72) Erfinder: ADASH, Gunter, W-8590 Marktredwitz (DE); FRANKFURTER, Günter, W-8590 Markredwitz (DE); MANNER, Reinhard, W-6457 Maintal-Dörnigheim (DE); PLÖCKER, Ulf, W-6454 Bruchköbel (DE)
(74) Vertreter: Spiess, Bernhard
(86) Internationale Anmeldenummer: EP9000723
(87) Internationale Veröffentlichungsnummer: WO9013405

(56) Entgegenhaltungen:
- EP-A- 0 097 750
- FR-A- 1 150 246
- FR-A- 2 503 615
- GB-A- 1 076 326
- US-A- 3 708 253
- Chemie-Technik, 7. Jahrgang, nr. 6, 1978, H. Schaefer: "Katalytische Ammonoxidation und Ammondehydrierung", Seiten 231-237

## Beschreibung

Die vorliegende Erfindung betrifft gasdichte Rohre aus Aluminiumoxid-Keramik. Gasdichte Keramikrohre werden eingesetzt, um beim BMA-Prozeß bei hohen Temperaturen ein Gemisch von Methan und Ammoniak katalytisch in Blausäure und Wasserstoff umzuwandeln (vgl. Chemie-Technik 1978, S. 231). Die Umsetzung erfolgt an einem Platinkatalysator, der auf der Innenseite eines Aluminiumoxidrohres aufgetragen ist. Die Rohre sind im Inneren einer Brennkammer aufgehängt und werden auf etwa 1250°C gehalten.

Die verwendeten Rohre sollten gasdicht und gegen hohe Temperaturen beständig sein. Ferner sollten sie an der Innenseite die erforderliche Menge Platin pro Flächeneinheit aufnehmen können. Die Beschichtung eines Aluminiumoxid-Kontaktrohres mit einer Platinlösung wird in Beispiel 1 der DE-C-30 34 957 beschrieben. Die Herstellung von Aluminiumoxidrohren, die für den BMA-Prozeß verwendbar sind und die den Wirkstoffklassen KER 708 und KER 710 nach DIN 40.685 zuzuordnen sind, ist seit langem Stand der Technik. Ein Verfahren zur Herstellung von beschichteten Al₂O₃-Rohren mit erhöhter Rauhigkeit der Innenseite wurde in DE-A-3 834 907 vorgeschlagen.

Aus der EP-A-97750 ist ein Verfahren zur Verformung stranggepreßter grüner keramischer Rohre bekannt, bei dem durch Eindrücken von jeweils zwei gegeneinander wirkenden toroidförmigen Rollen periodisch ein elliptischer Querschnitt erzeugt wird. Die erhaltenen Rohre sind makroporös und sollen den Durchtritt von Gasen gestatten.

Aufgabe der vorliegenden Erfindung ist es, Rohre aus Aluminiumoxid-Keramik bereitzustellen, die bedingt durch eine veränderte Geometrie, zu einer Verbesserung der Reaktionsausbeute des BMA-Prozesses führen.

Die Erfindung beruht auf der Erkenntnis, daß sich beim BMA-Verfahren eine verbesserte Durchmischung der Reaktionsgase in höheren Reaktionsausbeuten bemerkbar macht. Dies beruht vermutlich auf einer Störung der laminaren Strömung im Katalysatorrohr.

Gegenstand der Erfindung ist ein keramisches Rohr, das zur Durchführung katalytischer Hochtemperaturreaktionen geeignet ist und dessen kreisförmiger Querschnitt, bezogen auf die Längsrichtung, an mindestens zwei Stellen elliptisch verformt ist. Dieses Rohr ist dadurch gekennzeichnet, daß das Verhältnis von Innendurchmesser zum Abstand zweier Verformungen 1:2 bis 1:10 beträgt, das Rohr einen Al₂O₃-Gehalt von über 98 % aufweist, gasdicht ist und auf der Innenseite mit einem Platinkatalysator beschichtet ist.

Gegenstand der Erfindung ist ferner ein Verfahren zur Herstellung eines oben beschriebenen gasdichten keramischen Rohres, wobei man ein keramisches Pulver mit Wasser, einem Bindemittel und Plastifiziermittel versetzt, das Gemisch durch Strang ziehen zu einem zylinderrohrförmigen Grünkörper verformt, diesen durch Eindrücken von jeweils zwei gegeneinander wirkenden Stempeln an mindestens zwei Stellen so verformt, daß der Querschitt elliptisch wird und man den Grünkörper brennt. Das Verfahren ist dadurch gekennzeichnet, daß der Abstand zweier Verformungen jeweils 20 bis 100 mm beträgt, die Verformung durch halbkugelförmige Stempelenden unter gleichzeitiger Vibration des Stempels erfolgt, man als keramisches Pulver ein Aluminiumoxid mit einem Reingehalt von mindestens 90 % einsetzt, man den Grünkörper bei ca. 174°C dichtsintert und man das gesinterte Rohr auf der Innenseite mit einer Lösung tränkt, die Platin enthält.

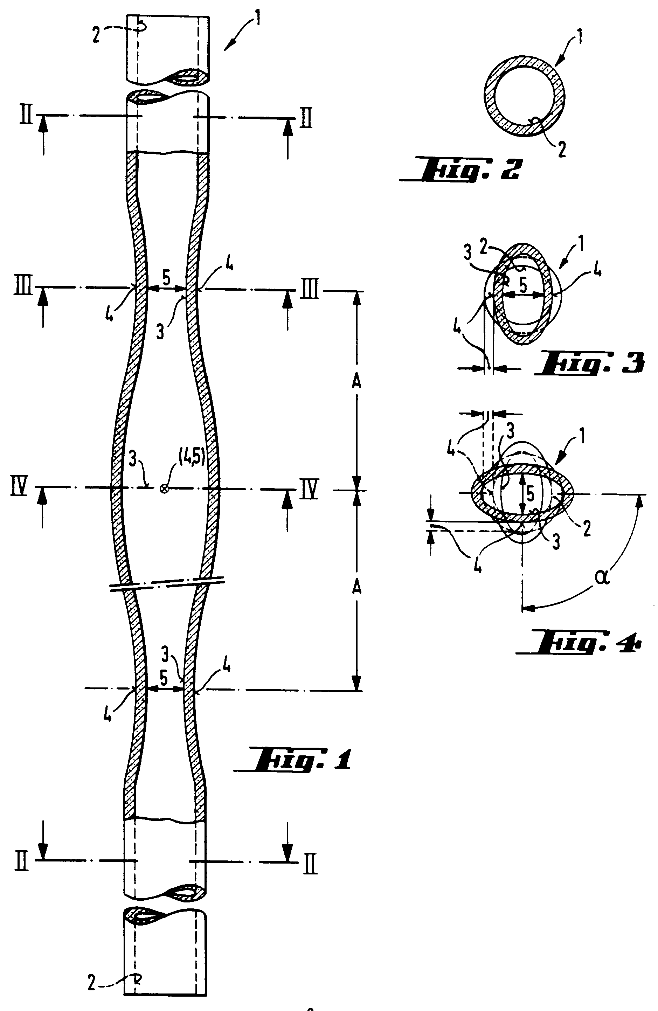

Figur 1 zeigt das Rohr (1) im Längsschnitt. Es ist zu erkennen, daß die Wand (2) des Rohres an mehreren Stellen eingedrückt ist. Dabei wird der Durchmesser des zylinderförmigen Rohres bis auf den kleinen Ellipsendurchmesser (5) verengt. Senkrecht dazu kommt es gleichzeitig zu einer Ausweitung des Rohres bis zum großen Ellipsendurchmesser. Der Grad der Verwirbelung des durch das Rohr strömenden Gases nimmt mit zunehmender Anzahl der Querschnittsveränderungen, d.h. der von außen aufgebrachten Verformungen (4), zu, so daß für praktische Zwecke an 5 bis 50, bevorzugt an 10 bis 30, insbesondere bevorzugt an 20 bis 25 Stellen, bezogen auf eine Länge von 1 m, der Querschnitt bis auf den kleinen Ellipsendurchmesser 5 verengt wird. Figur 2 zeigt den zylindrischen Teil im Querschnitt, Figur 3 zeigt einen Schnitt in Höhe der Verformung III-III und Figur 4 zeigt einen Schnitt in Höhe IV-IV. Figuren 3 und 4 zeigen die Verformung des kreisförmigen Querschnitts zu einer Ellipse (3).

Die obere Grenze der Anzahl von Verformungen (4)des keramischen Rohres (1) wird nur durch wirtschaftliche Überlegungen begrenzt. Eine besonders gute Durchmischung der Gase im Rohr läßt sich dadurch erreichen, daß die ellipsenförmigen Querschnittsverengungen jeweils um α= 90° verdreht zueinander vorgenommen werden (siehe Figur 1 und Figur 4). Der Abstand zwischen zwei Querschnittsverengungen sollte 20 bis 100 mm, vorzugsweise 35 bis 75 mm betragen. Die Verformung (4) des zylindrischen Grünkörpers läßt sich durch zwei gegeneinander wirkende, halbkugelförmige Stempelenden aus Hartgummi, Kunststoff oder Keramik, die einen an den angestrebten Abstand angepaßten Radius von etwa 10 bis 20 mm aufweisen, vornehmen. Der Stempel wird unter Vibration diametral auf den rohrförmigen Grünkorper gedrückt, da das thixotrop erregte keramische Material leichter verformbar ist. Die Verformung des rohrförmigen Grünkörpers erfolgt so, daß im ellipsenförmigen Querschnitt des gebrannten Rohres ein Achsenverhältnis von 1,5 bis 3, vorzugsweise 1,75 bis 2,5 vorliegt. Das Verhältnis Innendurchmesser des gebrannten Rohres (an den nicht verformten Stellen) zum Abstand zweier Verformungen beträgt bevorzugt 1 zu 6 bis 1 zu 4.

Die Herstellung von Aluminiumoxidrohren ist seit Jahren bekannt. Beispiele für die Herstellung transparenter Aluminiumoxidrohre finden sich z. B. in DE-A-32 01 750, DE-A-28 10 128, US-A-4 396 595 und in der Europäischen Anmeldung EP-A-134 277. Da es im vorliegenden Fall auf eine Transparenz der Rohre nicht ankommt, kann auf anorganische Dotierstoffe wie Magnesium und Zirkonoxid verzichtet werden. Der Reingehalt des verwendeten Aluminiumoxids sollte im Hinblick auf eine hohe Temperaturbeständigkeit des Rohres mindestens bei 90%, vorzugsweise mindestens bei 95%, liegen. Beste Ergebnisse wurden mit einem Reingehalt von ca. 99% erzielt. Ein günstiges, herkömmliches Herstellungsverfahren von Aluminumoxidrohren besteht im wesentlichen aus folgenden drei Verfahrensschritten:
a) Durch Mahlen von Aluminiumoxid gewinnt man eine wäßrige Aufschlämmung des pulverförmigen Aluminiumoxids.
b) Die wäßrige Aufschlämmung von Stufe a) wird versprüht und das gewonnene Sprühkorn mit Wasser und Plastifiziermittel versetzt. Das Gemisch wird zu einer plastischen Masse aufgeknetet und diese durch Strangziehen zu einem rohrförmigen Grünkorper verformt.
c) Diese Rohre werden zunächst bei 50°C getrocknet und dann bei etwa 1740°C gebrannt.

Das erste Mahlen von Aluminiumoxid in Schritt a) erfolgt am besten solange, bis beim späteren Brand bei 1740° eine Gasdichtigkeit erreicht werden kann. Dies ist bei mittleren Korndurchmessern unter 15 µm, insbesondere von 2 bis 5 µm der Fall. Das Versprühen in Schritt b) erfolgt vorzugsweise ohne Zusatz eines Bindemittels. Als Plastifiziermittel in Schritt b) werden üblicherweise hochmolekulare organische Verbindungen wie Polyvinylalkohol und/oder Methylcellulose oder wasserlösliche Stärke (Dextrin) verwendet. Die Rohre werden üblicherweise durch Strangziehen verformt; jedoch kann man auch Rohre durch isostatisches Pressen gewinnen, was aber aus Kostengründen unüblich ist. Die in dieser Erfindung beschriebene Verformung des Grünkörpers erfolgt zwischen den Verfahrensschritten b) und c) und wurde vorhergehend beschrieben. Die Erfindung wird durch das Beispiel näher erläutert.

### Beispiel

Aluminiumoxidpulver von 99%iger Reinheit wird durch Naßmahlung in einer Trommelmühle zerkleinert. Der mittlere Korndurchmesser bei dieser Naßmahlung (d₅₀-Wert) liegt bei 3 µm. Für die Weiterverarbeitung zu Rohren wird die Al₂O₃ Pulver-Suspension sprühgetrocknet, mit Wasser und einer Plastifiziermasse angeteigt und in einer Vakuumstrangpresse zu Rohren verformt. Die Rohre besitzen dann einen Außendurchmesser von 25,7 mm, einen Innendurchmesser von 19,8 mm und eine Länge von ca. 3000 mm. Das Rohr wird unmittelbar nach dem Strangziehen in der Weise bearbeitet, daß es insgesamt 34 jeweils 58 mm lange, aufeinanderfolgende Verformungen aufweist. Die gesamte Verformungstrecke von 34 x 58 mm = 1972 mm wird dabei so plaziert, daß sie gleichweit von den Rohrenden entfernt, d.h. mittig liegt. Diese Verformungen werden durch halbkugelförmig ausgebildete Stempelenden aus Hartgummi, Kunststoff oder Keramik, die einen Durchmesser von ca. 30 mm besitzen, erzeugt. Dazu werden die Stempel diametral und unter gleichzeitiger Vibration - durch die Vibration läßt sich die Verformung leichter vornehmen - so gegen den Rohrquerschnitt gedrückt, daß der ehemals kreisförmige äußere Querschnitt zu einem ellipsenähnlichen Querschnitt mit den Achsenlängen von 19,8 und 29, 2 mm verformt wird. Diese Verformungen erfolgen jeweils im Abstand von 50 mm und um 90° versetzt. Anschließend wird das Rohr auf bekannte Weise bei 50°C getrocknet und danach bei 1740°C gebrannt. Dabei ergibt sich ein Brennschwund von ca. 14%. Nach dem beiderseitigen Verkürzen des Rohres auf eine Länge von 2100 mm liegt dann eine Ausführung gemäß der Figur vor.

Ein so hergestelltes Rohr ergibt nach der Beschichtung beim BMA-Prozeß eine merklich höhere Ausbeute an Blausäure.

## Patentansprüche

1. Keramisches Rohr (1), das zur Durchführung katalytischer Hochtemperaturreaktionen geeignet ist und dessen kreisförmiger Querschnitt, bezogen auf die Längsrichtung, an mindestens zwei Stellen elliptisch verformt ist, dadurch gekennzeichnet, daß das Verhältnis von Innendurchmesser zum Abstand zweier Verformungen (4) 1:2 bis 1:10 beträgt, das Rohr einen Al₂O₃-Gehalt von über 98% aufweist, gasdicht ist und auf der Innenseite mit einem Platinkatalysator beschichtet ist.

2. Rohr gemäß Anspurch 1, dadurch gekennzeichnet, daß das Achsenverhältnis der Ellipse (3) im ellipsenförmigen Querschnitt 1,5 bis 3 beträgt.

3. Verfahren zur Herstellung eines gasdichten keramischen Rohres (1) nach Anspruch 1, wobei man ein keramisches Pulver mit Wasser, einem Bindemittel und Plastifiziermittel versetzt, das Gemisch durch Strangziehen zu einem zylinderförmigen Grünkörper verformt, diesen durch Eindrücken von jeweils zwei gegeneinanderwirkenden Stempeln an mindestens zwei Stellen so verformt, daß der Querschnitt elliptisch wird und man den Grünkörper brennt, dadurch gekennzeichnet, daß, bezogen auf die Längsrichtung, der Abstand zweier Verformungen (4) jeweils 20 - 100 mm beträgt, die Verformung durch halbkugelförmige Stempelenden unter gleichzeitiger Vibration des Stempels erfolgt, man als keramisches Pulver ein Aluminiumoxid mit einem Reingehalt von mindestens 90% einsetzt, man den Grünkörper bei ca. 1740°C dichtsintert und das gesinterte Rohr auf der Innenseite mit einer Lösung tränkt, die Platin enthält.

4. Verfahren nach Anspruch 3, dadurch gekennzeichnet, daß die Verformung des zylindrischen Grünkörpers an benachbarten Stellen jeweils um 90° versetzt genommen wird.

5. Verfahren nach Anspruch 3, dadurch gekennzeichnet, daß die Halbkugel des Stempels einen Radius von 10 - 20 mm aufweist.

6. Verwendung des keramischen Rohres (1) nach Anspruch 1 bei der Hochtemperatursynthese von Blausäure aus Ammoniak und Methan.

## Claims

1. A ceramic pipe (1) which is suitable for carrying out catalytic high temperature reactions and whose circular cross-section with respect to the longitudinal direction has been elliptically deformed in two or more places, wherein the ratio of internal diameter to the distance between two deformations (4) is 1 : 2 to 1 : 10 and the pipe has a content of Al₂O₃ of more than 98%, is gas-tight and is coated on the inside with a platinum catalyst.

2. A pipe as claimed in claim 1, wherein the axial ratio of the ellipse (3) in the ellipsoidal cross-section is 1.5 to 3.

3. A process for the production of a gas-tight ceramic pipe (1) as claimed in claim 1, water, a binder and plasticizer being added to a ceramic powder, the mixture being extruded to give a cylindrical green body, this latter being deformed in two or more places by pressing in by two dies in each case acting in the opposite direction to one another so that the cross-section becomes elliptical, and the green body being fired, wherein the distance between two deformations (4) is in each case 20 - 100 mm with respect to the longitudinal direction, the deformation is carried out by hemi-spherical punch ends with simultaneous vibration of the die, an alumina with a purity of at least 90% is used as the ceramic powder, the green body is dense-sintered at about 1740°C and the sintered pipe is impregnated on the inside with a solution which contains platinum.

4. The process as claimed in claim 3, wherein the cylindrical green body is deformed at adjacent points, offset by 90° with respect to one another.

5. The process as claimed in claim 3, wherein the hemisphere of the die has a radius of 10-20 mm.

6. Use of a ceramic pipe (1) as claimed in claim 1 in the high temperature synthesis of hydrocyanic acid from ammonia and methane.

## Revendications

1. Tube céramique convenant à l'exécution d'actions catalytiques à haute température et dont la section circulaire, relativement à la direction longitudinale, est déformée elliptiquement en au moins deux emplacements, caractérisé en ce que le rapport entre le diamètre intérieur et l'écartement entre les deux déformations (4), se situe entre 1 : 2 et 1 : 10, le tube présente une teneur en Al₂O₃ de plus de 98 %, est imperméable au gaz et est enduit sur sa face intérieure, au moyen d'un catalyseur de platine.

2. Tube selon la revendication 1, caractérisé en ce que le rapport entre les axes de l'ellipse (3) à section ellipsoïdale, se situe entre 1,5 et 3.

3. Procédé de réalisation d'un tube céramique imperméable au gaz selon la revendication 1, dans lequel on réalise une poudre céramique à partir d'eau, d'un liant et d'un plastifiant, on déforme le mélange en tirant, jusqu'à obtention d'un corps vert de forme cylindrique, on déforme ce dernier par compression en au moins deux emplacement au moyen de deux poinçons se faisant face jusqu'à ce que sa section devienne elliptique, on brûle le corps vert, caractérisé en ce que relativement à la direction longitudinale, l'écartement entre deux déformations se situe entre 20 et 100 mm, la déformation se produit sous l'action des extrémités hémisphériques du poinçon par l'intermédiaire des vibrations simultanées du poinçon, on utilise comme poudre céramique un oxyde d'aluminium dont la pureté est d'au moins 90 %, on agglomère le corps vert à environ 1740°C, on trempe la face intérieure du tube aggloméré au moyen d'un solution contenant du platine.

4. Procédé selon la revendication 3, caractérisé en ce que les déformations du corps vert cylindrique en des emplacements voisins, sont prises décalées de 90°.

5. Procédé selon la revendication 3, caractérisé en ce que l'hémisphère du poinçon présente un rayon de 10 à 20 mm.

6. Utilisation du tube (1) céramique selon la revendication 1, lors de la synthèse à haute température de l'acide prussique à partir d'ammoniac et de méthane.
